# EUROPEAN PATENT APPLICATION

(11) **EP 3 041 229 A1**
(43) Date of publication of application: **06.07.2016**
(21) Application number: 15200901.5
(22) Date of filing: 17.12.2015
(51) Int. Cl.: H04N 7/18, G08B 13/196, H04L 29/06, H04W 4/02

(54) **METHOD AND APPARATUS FOR RECORDING VIDEO AND COMPUTER PROGRAM**

(30) Priority: 31.12.2014 CN 201410852271
(71) Applicant: Xiaomi Inc., Beijing 100085 (CN)
(72) Inventor: LI, Feiyun, 100085 BEIJING (CN); XU, Fei, 100085 BEIJING (CN); ZHANG, Yanlu, 100085 BEIJING (CN)
(74) Representative: Delumeau, François Guy

(57) **Abstract**

The invention relates to a method and an apparatus for recording a video, belonging to the field of smart devices. The method includes: receiving (202) first network connection information from a mobile terminal; acquiring (204) second network connection information for a monitoring device associated with the mobile terminal according to the first network connection information; and sending (206) an instruction to the monitoring device to stop recording a video when the first network connection information matches the second network connection information.

## Description

### TECHNICAL FIELD

The invention generally relates to the field of smart devices, and more particularly to a method and an apparatus for recording a video.

### BACKGROUND

With the development of smart devices, more and more users start to use a smart camera to monitor a situation or events at home or in their residences.

The smart camera is connected to a router at home through a built-in Wi-Fi (Wireless-Fidelity) module, and a video recorded by the smart camera is uploaded to a server through the router. The video in the server may be acquired by a smart phone of a user. In this way, when the user is not at home, he can observe the situation at home.

In the prior art, the video recording on the smart camera is not satisfactorily controlled.

### SUMMARY

In order to improve control on the video recording at a monitoring device (e.g. smart camera), the invention provides a method and an apparatus for recording a video, the technical solutions are put forward as follows.

According to a first aspect of the invention, there is provided a method for recording a video, comprising steps of:
receiving first network connection information from a mobile terminal;
acquiring second network connection information for a monitoring device associated with the mobile terminal according to the first network connection information; and
sending an instruction to the monitoring device to stop recording a video when the first network connection information matches the second network connection information.

In an embodiment, the step of sending the instruction to the monitoring device to stop recording a video when the first network connection information matches the second network connection information comprises steps of :
acquiring respectively first device information from the first network connection information and second device information from the second network connection information, the first device information being device information of a gateway device connected with the mobile terminal, and the second device information being device information of a gateway device connected with the monitoring device;
determining whether the first device information and the second device are the same; and
sending the instruction to the monitoring device to stop recording a video when it is determined that the first device information and the second device information are the same.

In an embodiment, the method further comprises a step of:
sending a video recording instruction to the monitoring device when it is determined that the first device information and the second device are different;
   or,
sending a video recording instruction to the monitoring device when it is determined that the mobile terminal is disconnected.

In an embodiment, the step of acquiring the second network connection information for the monitoring device associated with the mobile terminal according to the first network connection information comprises steps of:
acquiring an identifier of the mobile terminal from the first network connection information;
finding the monitoring device associated with the mobile terminal according to a preset association relationship and the identifier of the mobile terminal;
sending an instruction of acquiring the second network connection information to the monitoring device associated with the mobile terminal; and
receiving the second network connection information from the monitoring device.

In an embodiment, the step of acquiring the second network connection information for the monitoring device associated with the mobile terminal according to the first network connection information further comprises steps of:
acquiring an identifier of the mobile terminal from the first network connection information;
finding an identifier of the monitoring device associated with the mobile terminal according to a preset association relationship and the identifier of the mobile terminal; and
acquiring the second network connection information previously uploaded by the monitoring device according to the identifier of the monitoring device, wherein the second network connection information is uploaded when the monitoring device detects that a connected network changes or the monitoring device is connected to a network for the first time.

In an embodiment, the method further comprises steps of:
receiving association information from the mobile terminal or the monitoring device, wherein the association information comprises an identifier of the mobile terminal and an identifier of the monitoring device; and
recording the association relationship between the mobile terminal and the monitoring device.

According to a second aspect of the invention, there is provided an apparatus for recording video, comprising:
a first receiving module configured to receive first network connection information from a mobile terminal;
an information acquisition module configured to acquire second network connection information for a monitoring device associated with the mobile terminal according to the first network connection information; and
a stop instruction sending module configured to send an instruction to the monitoring device to stop recording a video when the first network connection information matches the second network connection information.

In an embodiment, the stop instruction sending module comprises:
a device information acquisition sub-module configured to acquire respectively first device information from the first network connection information and second device information from the second network connection information, wherein the first device information is device information of a gateway device connected with the mobile terminal, and the second device information is device information of a gateway device connected with the monitoring device;
a device information detection sub-module configured to determine whether the first device information and the second device information acquired by the device information acquisition sub-module are the same; and
a stop instruction sending sub-module configured to send the instruction to the monitoring device to stop record a video when the device information detection sub-module determines that the first device information and the second device information are the same.

In an embodiment, the apparatus further comprises:
a first instruction sending module configured to send a video recording instruction to the monitoring device when the device information detection sub-module determines that the first device information and the second device are different;
   or,
a second instruction sending module configured to send a video recording instruction to the monitoring device when the device information detection sub-module determines that the mobile terminal is disconnected.

In an embodiment, the information acquisition module comprises:
a first acquisition sub-module configured to acquire an identifier of the mobile terminal from the first network connection information;
a first finding sub-module configured to find the monitoring device associated with the mobile terminal according to a preset association relationship and the identifier of the mobile terminal;
an information acquisition instruction sending sub-module configured to send an instruction of acquiring the second network connection information to the monitoring device found by the first finding sub-module; and
an information receiving sub-module configured to receive the second network connection information from the bound monitoring device.

In an embodiment, the information acquisition module further comprises:
a second acquisition sub-module configured to acquire an identifier of the mobile terminal from the first network connection information;
a second finding sub-module configured to find an identifier of the monitoring device associated with the mobile terminal according to a preset association relationship according to the identifier of the mobile terminal; and
a connection information acquisition sub-module configured to acquire the second network connection information previously uploaded by the monitoring device according to the identifier of the monitoring device found by the second finding sub-module, wherein the second network connection information is uploaded when the monitoring device detects that a connected network changes or the monitoring device is connected to a network for the first time.

In an embodiment, the apparatus further comprises:
an association information receiving module configured to receive association information from the mobile terminal or the monitoring device, wherein the association information comprises an identifier of the mobile terminal and an identifier of the monitoring device; and
an association relationship save module configured to record the association relationship between the mobile terminal and the monitoring device.

According to a third aspect of the invention, there is provided a device for recording a video, including:
a processor; and
a memory for storing instructions executable by the processor;
wherein the processor is configured to:
   receive first network connection information from a mobile terminal;
   acquire second network connection information for a monitoring device associated with the mobile terminal according to the first network connection information; and
   send an instruction to the monitoring device to stop recording a video when the first network connection information matches the second network connection information.

A computer program is provided according to a fourth aspect of the invention. The computer program performs the steps of the method for recording a video when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the invention may include the following advantageous effects:
By receiving first network connection information from a mobile terminal; acquiring second network connection information for a monitoring device associated with the mobile terminal according to the first network connection information; and sending an instruction to the monitoring device to stop recording a video when the first network connection information matches the second network connection information. This solution enables the monitoring device to automatically stop working without an instruction manually issued by the user, thus improving the efficiency, reducing electric consumption of the monitoring device, saving network resources involved in unnecessary uploading of video.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram of an exemplary scenario involved in each embodiment of the invention.
Fig. 2 is a flow chart showing a method for recording a video according to an exemplary embodiment.
Fig. 3A is a flow chart showing a method for recording a video according to another exemplary embodiment.
Fig. 3B is a diagram showing a method for recording a video according to another exemplary embodiment.
Fig. 3C is a diagram showing a method for recording a video according to another exemplary embodiment.
Fig. 3D is a flow chart showing a process of acquiring second network connection information involved in a method for recording a video according to another exemplary embodiment.
Fig. 3E is a flow chart showing a process of acquiring second network connection information involved in a method for recording a video according to another exemplary embodiment.
Fig. 3F is a flow chart showing a process of acquiring device information involved in a method for recording a video according to another exemplary embodiment.
Fig. 4 is a block diagram showing an apparatus for recording a video according to an exemplary embodiment.
Fig. 5 is a block diagram showing an apparatus for recording a video according to another exemplary embodiment.
Fig. 6 is a configuration diagram showing a device for recording a video according to an exemplary embodiment.

Specific embodiments of the invention are shown by the above drawings, and more detailed description will be made hereinafter. These drawings and text description are not for limiting the scope of conceiving the invention in any way, but for illustrating the concept of the invention for those skilled in the art by referring to specific embodiments.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

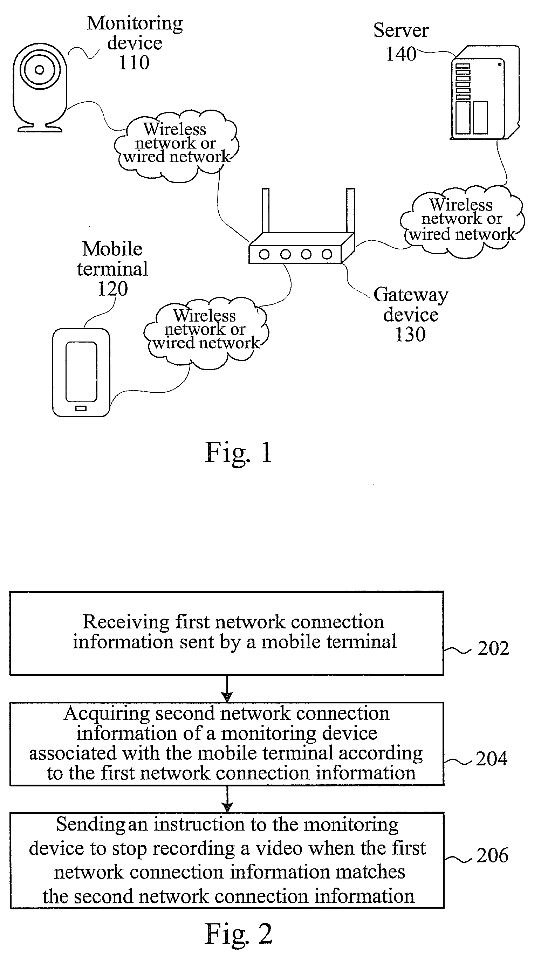

Fig. 1 is a diagram of an exemplary scenario involved in each embodiment of the invention, and the exemplary scenario includes a monitoring device 110, a mobile terminal 120, a gateway device 130 and a server 140.

The monitoring device 110 is a monitoring device with a function of video monitoring, for example, the monitoring device may be for example a wired or wireless smart camera with a certain computing capability.

The monitoring device 110 and the gateway device 130 are connected through a wired or wireless network.

The mobile terminal 120 is an electronic equipment such as a smart phone, a tablet computer, an eBook reader, a MP3 (Moving Picture Experts Group Audio Layer III) player and a MP4 (Moving Picture Experts Group Audio Layer IV) player, and the like.

The mobile terminal 120 and the gateway device 130 are connected through a wired or wireless network.

The gateway device 130 is an electronic equipment with a data processing capability. The gateway device 130 may be a router, a host enabled with a software based routing function or a network switch with a Layer 3 switch function.

The gateway device 130 and the server 140 are connected through a wired or wireless network.

The server 140 may be a server, or a server cluster comprising several servers, or a cloud computing service center.

It should be noted that, the method for recording a video provided by the invention may be implemented by the gateway device 130 or the server 140. In order to simplify the description, the description hereinafter takes an example wherein the method for recording a video is implemented by the server, which does not limit the invention.

Fig. 2 is a flow chart showing a method for recording a video according to an exemplary embodiment. The method for recording a video according to the present embodiment may be implemented by the server 140 shown in Fig. 1, and includes the following steps.

In step 202, first network connection information is received from a mobile terminal.

In step 204, second network connection information is acquired for a monitoring device associated with the mobile terminal according to the first network connection information.

In step 206, an instruction is sent to the monitoring device to stop recording a video when the first network connection information matches the second network connection information.

Accordingly, the method for recording a video provided by the present exemplary embodiment may enable the server to: receive first network connection information sent by a mobile terminal; acquire second network connection information for a monitoring device associated with the mobile terminal according to the first network connection information (this step of acquiring will be described in detail hereinafter); and send an instruction to the monitoring device to stop recording a video when the first network connection information matches the second network connection information. According to the invention, the term "network connection information" refers to information used to identify a network terminal or a network device, for example, a MAC address of a router, an SSID or a MAC address of a gateway. And the term "matches" or "matching" means that one information is consistent or identical with another information, both information representing a same device. For example, if the information of network connection of a mobile telephone of a user is consistent with the information of network connection of a smart camera, then the information of network connection of the mobile telephone matches the information of network connection of the smart camera, which indicates that the user is at home and that the video recording by the smart camera is to be stopped and not to be uploaded to the server (cloud end). Thus, when the network connection information of the mobile terminal matches the network connection information of the monitoring device, it is determined that the mobile terminal and the monitoring device are in the proximity of each other (for example, usually about a few meters (e.g. 1m, 3m, 5m, etc.) between each other), which often implies that the user of the mobile terminal is at home. The invention offers thus a solution to better control the recording of a video that is to be uploaded to the server: in the case that the mobile terminal is near the monitoring device (which usually means that the user is at home), instruct the monitoring device to stop recording any video to be uploaded to the server. This solution enables the monitoring device to automatically stop working without an instruction manually issued by the user, thus improving the efficiency, reducing electric consumption of the monitoring device, saving network resources involved in unnecessary uploading of video.

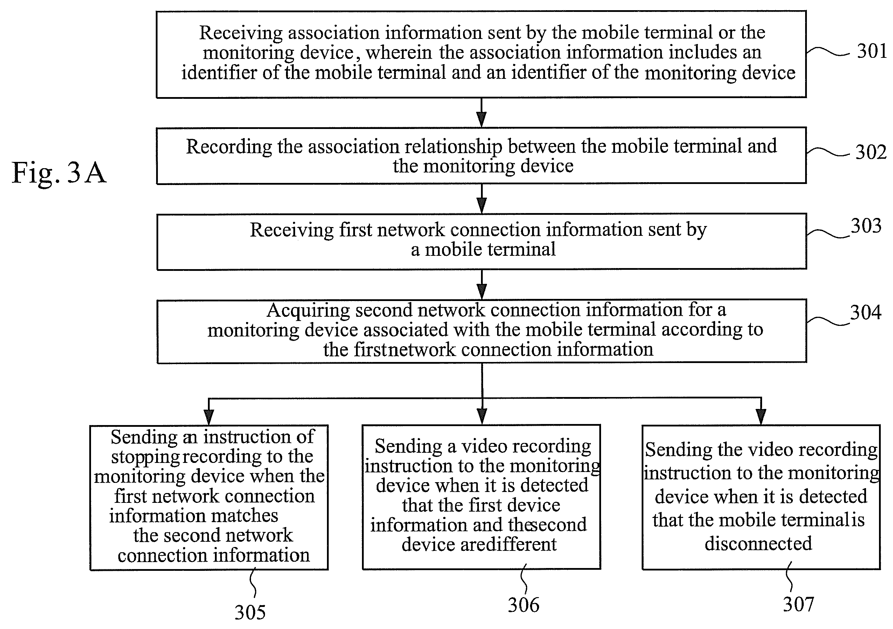

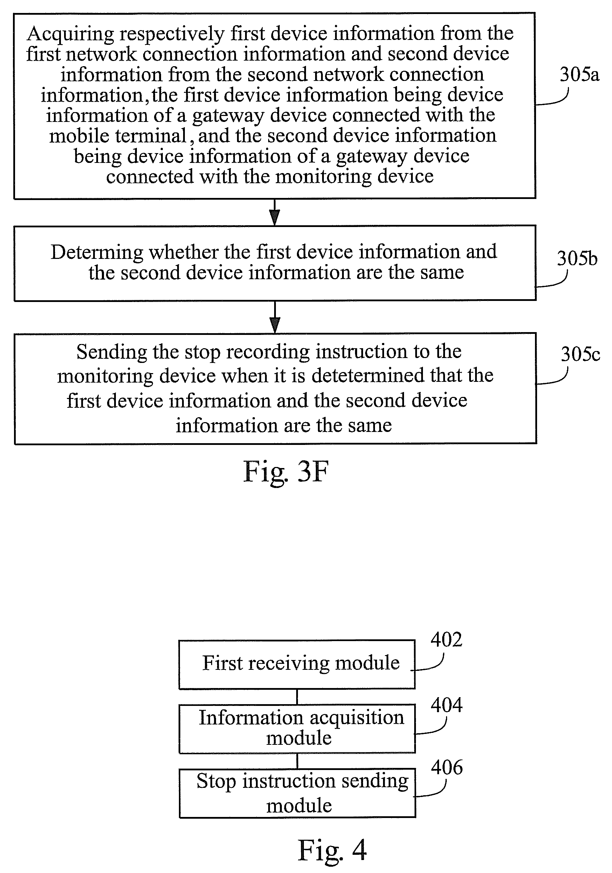

Fig. 3A is a flow chart showing a method for recording a video according to another exemplary embodiment, the method for recording a video according to the present embodiment may be implemented by the server 140 shown in Fig. 1, the method for recording a video includes the following steps.

In step 301, association information sent by a mobile terminal or a monitoring device is received, the association information including an identifier of a mobile terminal and an identifier of a monitoring device.

In order to make the server acquire (step 204) the network connection information of the monitoring device after receiving the network connection information of the mobile terminal associated with the monitoring device the server needs to know an association relationship between the mobile terminal and the monitoring device in advance. To this end, the server may receive, from the mobile terminal or from the monitoring device, association information that associates an identifier of the mobile terminal with an identifier of the monitoring device to indicate their association relationship , and store this association information for example in a memory of the server..

In a particular embodiment, a software application runs on the mobile terminal to manage the monitoring device associated with the mobile terminal. A user inputs, for example on a User Interface of the mobile terminal, an identifier of the monitoring device to be associated with the mobile terminal. Then the mobile terminal sends association information, which comprises the identifier of the monitoring device and an identifier of the mobile terminal, to the server. Herein, the identifier of the monitoring device may be a MAC (Media Access Control) address of a communication module (e.g. Bluetooth, Wi-Fi...) in the monitoring device, and the identifier of the mobile terminal may be a MAC address of a communication module (e.g. Bluetooth, Wi-Fi...) of the mobile terminal or an IMEI (International Mobile Equipment Identity) code of the mobile terminal and the like.

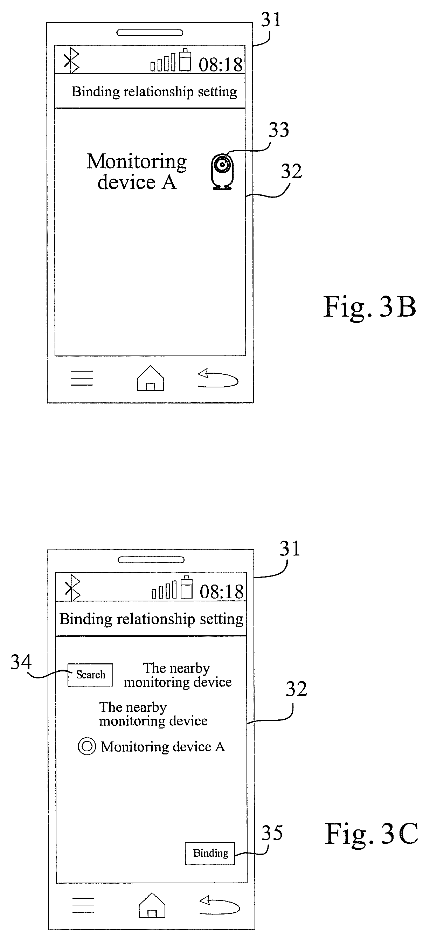

For example, as shown in Fig. 3B, the software application for managing a monitoring device A to be associated with a mobile terminal 31 is installed in and runs on the mobile terminal 31. The mobile terminal 31 obtains a MAC address of a Bluetooth module of the monitoring device by scanning a QR (Quick Response) code provided on the monitoring device in order to connect to this monitoring device. Once the scanning is completed, the mobile terminal 31 displays a camera logo 33 that represents the monitoring device on an association relationship setting interface 32. The user may select this camera logo 33 on this user interface 32 if he determines to associate the monitoring device with the mobile terminal 31. Once the selection is done by the user, the mobile terminal 31 sends the identifier (MAC address) of the Bluetooth module of the monitoring device and the identifier (MAC address, IMEI code, etc.) of the mobile terminal 31 to the server. In another particular embodiment, a mobile terminal runs a software application to manage a monitoring device, a user clicks a search option button on an association relationship setting interface of the mobile terminal to search monitoring devices that are near the mobile terminal. Then a nearby monitoring device is searched out and displayed in a monitoring device list. The user selects the monitoring device in the monitoring device list to perform an association operation. The mobile terminal sends association information comprising the identifier of the mobile terminal and the identifier of the selected monitoring device to the server. It should be noted that, in another particular embodiment, a mobile terminal may be connected to a selected monitoring device via a wireless network and send the identifier of the mobile terminal to the monitoring device, and then the monitoring device sends the identifier of the mobile terminal and the identifier of the monitoring device to the server.

For example, as shown in Fig. 3C, a mobile terminal 31 runs a software application to manage monitoring devices, the user clicks a search button 34 on an association relationship setting interface 32 of the mobile terminal 31 to search a monitoring device that is near the mobile terminal. A nearby monitoring device A is searched out and displayed in a monitoring device list. The user then selects the monitoring device A in the monitoring device list and clicks an association button 35. Association information comprising the identifiers of the mobile terminal and the monitoring device is sent to the server by the mobile terminal or the monitoring device.

Correspondingly, the server receives the association information sent by the mobile terminal or the monitoring device.

In step 302, the association relationship between the mobile terminal and the monitoring device is memorized.

The server memorizes the association relationship between the mobile terminal and the monitoring device indicated by the received association information that associates the identifier of the mobile terminal with the identifier of the monitoring device, wherein, the association relationship is recorded in an association relationship list with a list structure as shown in a table I.

**Table I**

| identifier of mobile terminal | identifier of monitoring device |
|---|---|
| 00:11:22:AA:BB | 00:11:22:AA:CC |
| 00:11:22:AA:BC | 00:11:22:AA:CD |
| 00:11:22:AA:BD | 00:11:22:AA:CE |

It should be noted that, one mobile terminal may be associated with a plurality of monitoring devices at the same time, and one monitoring device may also be associated with a plurality of mobile terminals at the same time. By way of example and not as a limitation, the present invention describes one mobile terminal associated with one monitoring device.

In step 303, first network connection information is received from a mobile terminal.

More specifically, the mobile terminal is able to automatically detect the current network connection situation in which the mobile terminal is located (for example, the mobile terminal is currently connected to a certain Wi-Fi network, the connected Wi-Fi network changes, etc.) when a software application of managing a monitoring device runs on the terminal. The mobile terminal may send the current network connection information (namely, the first network connection information) to the server wherein, the first network connection information includes a MAC address and SSID (Service Set Identifier) information of a gateway device connected to the mobile terminal.

Correspondingly, the server receives the first network connection information from the mobile terminal.

In step 304, second network connection information is acquired for a monitoring device associated with the mobile terminal according to the first network connection information.

More specifically, this step 304 may be implemented by the server according to the following two possible variations.

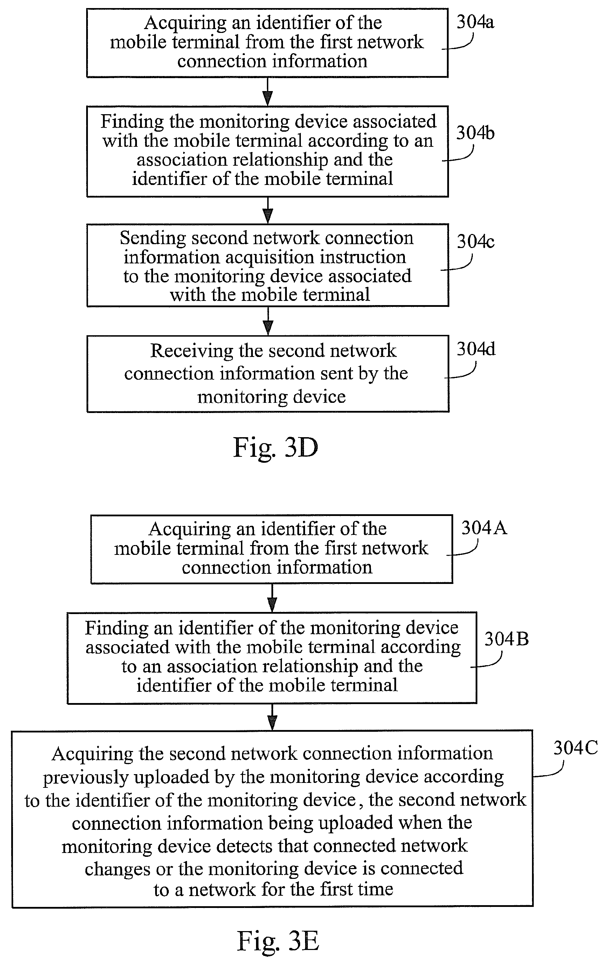

In a first possible variation, as shown in Fig. 3D, step 304 may include step 304a to step 304d.

In step 304a, the server acquires an identifier of the mobile terminal from the first network connection information.

For example, a MAC address 00:11:22:AA:BB of a Bluetooth module of the mobile terminal is acquired by the server from the received first network connection information.

In step 304b, the server finds a monitoring device associated with the mobile terminal according to an association relationship and the identifier of the mobile terminal.

More specifically, the server finds the identifier of the monitoring device associated with the mobile terminal according to an association relationship that is recorded in the memorized association relationship list and according to the acquired identifier of the mobile terminal. By reusing the example of Table 1, the identifier of the associated monitoring device that is found according to the association relationship and the acquired MAC address 00:11:22:AA:BB of the mobile terminal is 00:11:22:AA:CC.

In step 304c, the server sends an instruction to the monitoring device associated with mobile terminal to acquire the second network connection information.

More specifically, the server sends the instruction to the monitoring device associated with mobile terminal to acquire the network connection information of the monitoring device (i.e., the second network connection information) after finding the monitoring device associated with the mobile terminal, wherein the instruction is used to acquire the current network connection information of the monitoring device.

Correspondingly, the monitoring device receives the instruction to acquire the second network connection information. The monitoring device sends to the server the acquired network connection information, namely, the second network connection information, upon receiving the instruction. Herein, the second network connection information includes a MAC address and SSID information of a gateway device connected to the monitoring device.

In step 304d, the server receives the second network connection information from the monitoring device associated with the mobile terminal.

Thus the server may know the MAC address and the SSID information of the gateway device that is currently connected to the monitoring device from the received second network connection information.

In a second possible variation, as shown in Fig. 3E, step 304 may include step 304A to step 304C.

In step 304A, the server acquires an identifier of the mobile terminal from the first network connection information.

For example, a MAC address 00:11:22:AA:BB of a Bluetooth module of the mobile terminal is acquired by the server from the received first network connection information.

In step 304B, the server finds an identifier of the monitoring device associated with the mobile terminal according to an association relationship and the identifier of the mobile terminal.

In this example, the server finds the identifier of the monitoring device associated with the mobile terminal according to an association relationship that is recorded in a memorized association relationship list illustrated in Table 1 for example, and according to the acquired identifier of the mobile terminal. For example, the identifier of the monitoring device that is found in the association relationship according to the acquired MAC address 00:11:22:AA:BB of the Bluetooth module in the mobile terminal is 00:11:22:AA:CC.

In step 304C, the server acquires, according to the identifier of the monitoring device, the second network connection information previously uploaded by the monitoring device to the server and thus stored in the server, wherein the second network connection information is uploaded by the monitoring device to the server when the monitoring device detects that a connected network (for example, a Wi-Fi network connected to the monitoring device) changes or when the monitoring device is connected to a network for the first time.

The monitoring device is able to detect the network connection situation in which it is located. When the monitoring device detects that the network connection situation changes, or when the monitoring device is connected to a network for the first time, the monitoring device acquires its current network connection information (called "the second network connection information"), and sends it to the server. It should be noted that, the monitoring device may also send the current network connection information to the server periodically.

The server records the network connection information of the monitoring device in a network connection information list in association with the identifier of the monitoring device. The server may update data in the list in real time. A list structure of the network connection information list may be as shown in a table II:

**Table II**

| identifier of monitoring device | network connection information of monitoring device |
|---|---|
| 00:11:22:AA:CC | SSID information: SSID A |
| | MAC address: MAC A |
| 00:11:22:AA:CD | SSID information: SSID B |
| | MAC address: MAC B |
| 00:11:22:AA:CE | SSID information: SSID C |
| | MAC address: MAC C |

Thus the server is able to find the current network connection information of the monitoring device according to the identifier of the monitoring device. For example, if the identifier of the monitoring device is 00:11:22:AA:CC, then the current network connection information of this monitoring device is "SSID information: SSID A, MAC address: MAC A".

Step 305 is now described in detail to explain how to determine whether the first network connection matches the second network connection information,

The server compares the received first network connection information with the acquired second network connection information, if the first network connection information matches with the second network connection information, it can be determined that the mobile terminal and the monitoring device are connected to the same gateway device, in other words, the mobile terminal and the monitoring device are located near each other. Accordingly, the instruction of stopping recording the video is sent to the monitoring device.

In step 305a, the server acquires first device information from the first network connection information and second device information from the second network connection information, wherein the first device information is device information of a gateway device connected with the mobile terminal, and the second device information is device information of a gateway device connected with the monitoring device.

The server acquires the first device information from the first network connection information, and the first device information includes the MAC address and the SSID information of the gateway device connected to the mobile terminal, for example, wherein the first device information is "SSID information: SSID A, MAC address: MAC A".

Similarly, the server acquires the second device information from the second network connection information. When the gateway device is connected with the gateway device through a network cable, the second device information includes the MAC address of the gateway device. When the gateway device is connected with the gateway device through the wireless network, the second device information includes the MAC address and the SSID information of the gateway device.

In step 305b, the server determines whether the first device information and the second device information are the same.

When the monitoring device is connected with a gateway device via a cable, the server detects whether MAC addresses of the gateway devices respectively connected to the mobile terminal and to the monitoring device are the same. If the two MAC addresses are the same, it is determined that the mobile terminal and the monitoring device are connected to a same gateway device, and if the two MAC addresses are different, it is determined that the mobile terminal and the monitoring device are not connected to a same one gateway device.

When the monitoring device is wirelessly connected to a gateway device, the server detects whether SSID information of the gateway devices respectively connected to the mobile terminal and to the monitoring device are the same. If the SSID information of the two gateway devices are different, it is determined that the mobile terminal and the monitoring device are not connected to a same one gateway device. Since it is possible that different gateway devices may be set with same SSID information, the server further determines whether MAC addresses of the gateway devices respectively connected to the mobile terminal and to the monitoring device are the same when it determines that SSID information of the two gateway devices are the same. In this case, when the two MAC addresses are the same, it is determined that the mobile terminal and the monitoring device are connected to a same gateway device, and when the two MAC addresses are different, it is determined that the mobile terminal and the monitoring device are not connected to a same gateway device.

In step 305c, the server sends to the monitoring device to stop recording a video if the server determines that the first device information and the second device information are the same.

When it is determined that the first device information and the second device information are the same, the server sends the instruction to the monitoring device to stop recording a video, this instruction being used to control the monitoring device to stop monitoring or recording any video to be uploaded to the server. Correspondingly, the monitoring device stops monitoring according to the instruction.

In step 306, a video recording instruction is sent to the monitoring device when it is determined that the first device information and the second device are different.

When it is determined that the first device information and the second device are different, i.e., the mobile terminal and the monitoring device are not connected to the same gateway device, it is considered that the user is not at home, and the video recording instruction is sent to the monitoring device to record a video to be uploaded to the server.

In step 307, a video recording instruction is sent to the monitoring device when it is determined that the mobile terminal is disconnected.

When the mobile terminal is disconnected with a network (for example, a wireless or wireline Local Area Network (LAN), 3G (3rd-Generation), etc.), the disconnection information will be sent to the server, and the server is informed that the mobile terminal is not connected to any gateway device. The server sends the video recording instruction to the monitoring device after the disconnection information is received, and informs the monitoring device of performing the monitoring.

Accordingly, the method for recording a video provided by the present exemplary embodiment may enable a server to receive first network connection information from a mobile terminal, acquire second network connection information for a monitoring device associated with the mobile terminal according to the first network connection information, and send an instruction to the monitoring device to stop recording a video when the first network connection information matches the second network connection information, thus the solution enables the monitoring device to automatically stop working without an instruction manually issued by the user, thus improving the efficiency, reducing electric consumption of the monitoring device, saving network resources involved in unnecessary uploading of video

The present exemplary embodiment may further enable the monitoring device to upload the second network connection information to the server or enable the server to inquire about the second network connection information of the monitoring device. In this case, the server decides whether the gateway devices respectively connected to the mobile terminal and to the monitoring device are the same according to the second network connection information and the first network connection information, and sends the corresponding instruction to the monitoring device according to a decision, thus this solution enables the monitoring device to automatically switch working functions without an instruction manually issued by the user, thus improving the efficiency and enhancing the user experience.

It should be explained that, the method for recording a video provided by the present exemplary embodiment may be also implemented by the gateway device 130, in other words, the association relationship between the mobile terminal and the monitoring device is memorized in the gateway device 130. In this case, the gateway device 130 acquires the network connection information of the monitoring device associated with the mobile terminal according to the received first network connection information, and sends the instruction of stopping recording to the monitoring device when the first network connection information matches the second network connection information. The implementation manner thereof is similar to the above embodiment, which will not be elaborated herein.

The following is an embodiment of an apparatus according to the invention, which may be configured to execute the above mentioned embodiments of the method in the invention. The undisclosed details about the embodiment of the apparatus in the invention may refer to the embodiment of the method in the invention.

Fig. 4 is a block diagram showing an apparatus for recording a video according to an exemplary embodiment, the apparatus for recording a video may be realized by a part of or all of a server by means of software and hardware or combination of both. The apparatus for recording video may include:
a first receiving module 402 configured to receive first network connection information from a mobile terminal;
an information acquisition module 404 configured to acquire second network connection information for a monitoring device associated with the mobile terminal according to the first network connection information received by the first receiving module 402; and
a stop instruction sending module 406 configured to send an instruction to the monitoring device to stop recording a video when the first network connection information received by the first receiving module matches the second network connection information acquired by the information acquisition module 404.

Accordingly, the apparatus for recording a video provided by the present exemplary embodiment may receive first network connection information sent by a mobile terminal, acquire second network connection information for a monitoring device associated with the mobile terminal according to the first network connection information, and send an instruction to the monitoring device to stop recording a video when the first network connection information matches the second network connection information, thus the solution enables the monitoring device to automatically stop working without an instruction manually issued by the user, thus improving the efficiency, reducing electric consumption of the monitoring device, saving network resources involved in unnecessary uploading of video.

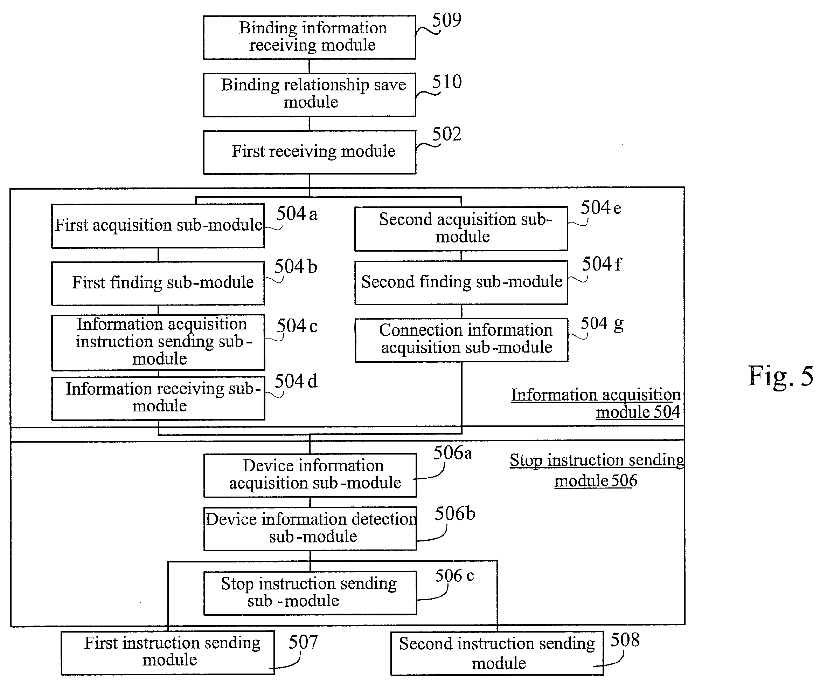

Fig. 5 is a block diagram showing an apparatus for recording a video according to another exemplary embodiment, and the apparatus for recording a video may be realized by a part of or all of a server by means of software and hardware or combination thereof. The apparatus for recording video may include:
a first receiving module 502 configured to receive first network connection information from a mobile terminal;
an information acquisition module 504 configured to acquire second network connection information for a monitoring device associated with the mobile terminal according to the first network connection information received by the first receiving module 502; and
a stop instruction sending module 506 configured to send an instruction to the monitoring device to stop recording a video when the first network connection information received by the first receiving module 502 matches the second network connection information acquired by the information acquisition module 504.

Optionally, the stop instruction sending module 506 includes:
a device information acquisition sub-module 506a configured to acquire first device information from the first network connection information and second device information from the second network connection information, wherein the first device information is device information of a gateway device connected with the mobile terminal, and the second device information is device information of a gateway device connected with the monitoring device;
a device information detection sub-module 506b configured to determine whether the first device information and the second device information acquired by the device information acquisition sub-module 506a are the same; and
a stop instruction sending sub-module 506c configured to send the instruction to the monitoring device to stop recording the video when the device information detection sub-module 506b determines that the first device information and the second device information are the same.

Optionally, the apparatus further includes:
a first instruction sending module 507 configured to send a video recording instruction to the monitoring device when the device information detection sub-module 506b detects that the first device information and the second device are different;
   or,
a second instruction sending module 508 configured to send the video recording instruction to the monitoring device when the device information detection sub-module 506b determines that the mobile terminal is disconnected.

Optionally, the information acquisition module 504 includes:
a first acquisition sub-module 504a configured to acquire an identifier of the mobile terminal from the first network connection information;
a first finding sub-module 504b configured to find the monitoring device associated with the mobile terminal according to an association relationship and the identifier of the mobile terminal acquired by the first acquisition sub-module 504a;
an information acquisition instruction sending sub-module 504c configured to send an instruction of acquiring the second network connection information to the monitoring device associated with the mobile terminal and found by the first finding sub-module 504b; and
an information receiving sub-module 504d configured to receive the second network connection information from the monitoring device associated with the mobile terminal and found by the first finding sub-module 504b.

Optionally, the information acquisition module 504 further includes:
a second acquisition sub-module 504e configured to acquire an identifier of the mobile terminal from the first network connection information;
a second finding sub-module 504f configured to find an identifier of the monitoring device associated with the mobile terminal according to an association relationship and the identifier of the mobile terminal acquired by the second acquisition sub-module 504e; and
a connection information acquisition sub-module 504g configured to acquire the second network connection information previously uploaded by the monitoring device according to the identifier of the monitoring device found by the second finding sub-module 504f, wherein the second network connection information is uploaded when the monitoring device detects that a connected network changes or the monitoring device is connected to a network for the first time.

Optionally, the apparatus further includes:
association information receiving module 509 configured to receive association information from the mobile terminal or the monitoring device, wherein the association information includes the identifier of the mobile terminal and the identifier of the monitoring device; and
association relationship save module 510 configured to memorize the association relationship between the mobile terminal and the monitoring device.

Accordingly, the apparatus for recording a video provided by the present exemplary embodiment may: receive first network connection information from a mobile terminal; acquire second network connection information for a monitoring device associated with the mobile terminal according to the first network connection information; and send an instruction to the monitoring device to stop recording a video when the first network connection information matches the second network connection information, thus the solution enables the monitoring device to automatically stop working without an instruction manually issued by the user, thus improving the efficiency, reducing electric consumption of the monitoring device, saving network resources involved in unnecessary uploading of video.

The present exemplary embodiment may further upload the second network connection information by the monitoring device or inquire about the second network connection information for the monitoring device by the server. In this case, the server judges whether the gateway devices respectively connected with the mobile terminal and the monitoring device are the same according to the second network connection information and the first network connection information sent by the mobile terminal, and sends the corresponding instruction to the monitoring device according to the judgment result, thus achieving the effects of improving the accuracy of the second network connection information, and improving the immediacy of video monitoring.

With respect to the apparatus in the above embodiments, the specific manners for performing operations for individual modules therein have been described in detail in the embodiments regarding the methods, which will not be elaborated herein.

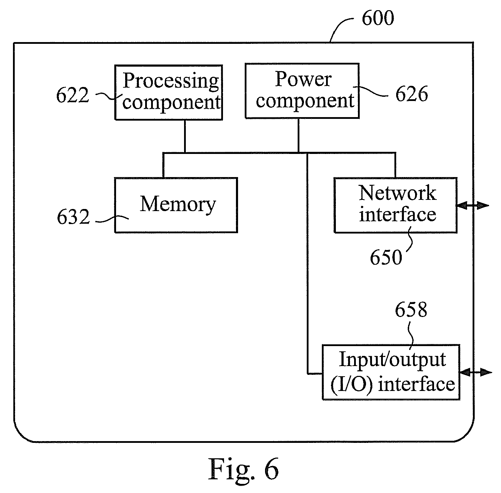

Fig. 6 is a block diagram showing a device for recording a video according to an exemplary embodiment. The device 600 includes a processing component 622 that further includes one or more processors, and memory resources represented by a memory 632 for storing instructions, such as application programs, executable by the processing component 622. The application programs stored in memory 632 may include one or more modules, each of which corresponds to a set of instructions. Moreover, the processing component 622 is configured to execute instructions for performing the above method for recording video at the server side.

The device 600 may also include a power component 626 configured to perform power management of the device 600, wired or wireless network interface(s) 650 configured to connect the device 600 to a network, and an input/output (I/O) interface 658. The device 600 may operate based on an operating system stored in the memory 632, such as Windows ServerTM, Mac OS XTM, UnixTM, LinuxTM, FreeBSDTM, or the like.

## Claims

1. A method for recording a video, **characterized in that**, the method comprises steps of :
receiving (202) first network connection information from a mobile terminal;
acquiring (204) second network connection information for a monitoring device associated with the mobile terminal according to the first network connection information; and
sending (206) an instruction to the monitoring device to stop recording a video when the first network connection information matches the second network connection information.

2. The method according to claim 1, **characterized in that**, the step of sending the instruction to the monitoring device to stop recording a video when the first network connection information matches the second network connection information comprises steps of :
acquiring (305a) respectively first device information from the first network connection information and second device information from the second network connection information, the first device information being device information of a gateway device connected with the mobile terminal, and the second device information being device information of a gateway device connected with the monitoring device;
determining (305b) whether the first device information and the second device are the same; and
sending (305c) the instruction to the monitoring device to stop recording a video when it is determined that the first device information and the second device information are the same.

3. The method according to claim 2, **characterized in that**, the method further comprises a step of :
sending a video recording instruction to the monitoring device when it is determined that the first device information and the second device are different;
or,
sending a video recording instruction to the monitoring device when it is determined that the mobile terminal is disconnected.

4. The method according to any one of claims 1-3, **characterized in that**, the step of acquiring the second network connection information for the monitoring device associated with the mobile terminal according to the first network connection information comprises steps of:
acquiring (304a) an identifier of the mobile terminal from the first network connection information;
finding (304b) the monitoring device associated with the mobile terminal according to a preset association relationship and the identifier of the mobile terminal;
sending (304c) an instruction of acquiring the second network connection information to the monitoring device associated with the mobile terminal; and
receiving (304d) the second network connection information from the monitoring device.

5. The method according to any one of claims 1-3, **characterized in that**, the step of acquiring the second network connection information for the monitoring device associated with the mobile terminal according to the first network connection information further comprises steps of :
acquiring (304A) an identifier of the mobile terminal from the first network connection information;
finding (304B) an identifier of the monitoring device associated with the mobile terminal according to a preset association relationship and the identifier of the mobile terminal; and
acquiring (304C) the second network connection information previously uploaded by the monitoring device according to the identifier of the monitoring device, wherein the second network connection information is uploaded when the monitoring device detects that a connected network changes or the monitoring device is connected to a network for the first time.

6. The method according to any one of claims 1-5, **characterized in that**, the method further comprises steps of:
receiving (301) association information from the mobile terminal or the monitoring device, wherein the association information comprises an identifier of the mobile terminal and an identifier of the monitoring device; and
recording (302) the association relationship between the mobile terminal and the monitoring device.

7. An apparatus for recording a video, **characterized in that**, the apparatus comprises:
a first receiving module (402,502) configured to receive first network connection information from a mobile terminal;
an information acquisition module (404) configured to acquire second network connection information for a monitoring device associated with the mobile terminal according to the first network connection information received by the first receiving module (402); and
a stop instruction sending module (406) configured to send an instruction to the monitoring device to stop recording a video when the first network connection information received by the first receiving module (402) matches the second network connection information acquired by the information acquisition module.

8. The apparatus according to claim 7, **characterized in that**, the stop instruction sending module (506) comprises:
a device information acquisition sub-module (506a) configured to acquire respectively first device information from the first network connection information and second device information from the second network connection information, the first device information being device information of a gateway device connected with the mobile terminal, and the second device information being device information of a gateway device connected with the monitoring device;
a device information detection sub-module (506b) configured to determine whether the first device information and the second device information acquired by the device information acquisition sub-module (506a) are the same; and
a stop instruction sending sub-module (506c) configured to send the instruction to the monitoring device to stop record a video when the device information detection sub-module (506b) determines that the first device information and the second device information are the same.

9. The apparatus according to claim 8, **characterized in that**, the apparatus further comprises:
a first instruction sending module (507) configured to send a video recording instruction to the monitoring device when the device information detection sub-module (506b) determines that the first device information and the second device are different;
or,
a second instruction sending module (508) configured to send a video recording instruction to the monitoring device when the device information detection sub-module (506b) determines that the mobile terminal is disconnected.

10. The apparatus according to any one of claims 7-9, **characterized in that**, the information acquisition module (504) comprises:
a first acquisition sub-module (504a) configured to acquire an identifier of the mobile terminal from the first network connection information;
a first finding sub-module (504b) configured to find the monitoring device associated with the mobile terminal according to a preset association relationship and the identifier of the mobile terminal acquired by the first acquisition sub-module (504a);
an information acquisition instruction (504c) sending sub-module configured to send an instruction of acquiring the second network connection information to the monitoring device found by the first finding sub-module (504b); and
an information receiving sub-module (504d) configured to receive the second network connection information from the monitoring device.

11. The apparatus according to any one of claims 7-9, **characterized in that**, the information acquisition module (504) further comprises:
a second acquisition sub-module (504e) configured to acquire an identifier of the mobile terminal from the first network connection information;
a second finding sub-module (504f) configured to find an identifier of the monitoring device associated with the mobile terminal according to a preset association relationship according to the identifier of the mobile terminal acquired by the second acquisition sub-module (504e); and
a connection information acquisition sub-module (504g) configured to acquire the second network connection information previously uploaded by the monitoring device according to the identifier of the monitoring device found by the second finding sub-module (504f), wherein the second network connection information is uploaded when the monitoring device detects that a connected network changes or the monitoring device is connected to a network for the first time.

12. The apparatus according to any one of claims 7-11, **characterized in that**, the apparatus further comprises:
an association information receiving module (509) configured to receive association information from the mobile terminal or the monitoring device, wherein the association information comprises an identifier of the mobile terminal and an identifier of the monitoring device; and
an association relationship save module (510) configured to record the association relationship between the mobile terminal and the monitoring device.

13. A computer program including instructions for executing the steps of a method for recording a video according to any one of claims 1 to 6 when said program is executed by a computer.

14. A recording medium readable by a computer and having recorded thereon a computer program including instructions for executing the steps of a method for recording a video according to any one of claims 1 to 6.
